# EUROPÄISCHE PATENTSCHRIFT

(11) **EP 1 813 142 B1**
(45) Veröffentlichungstag und Bekanntmachung des Hinweises auf die Patenterteilung: **08.07.2009**
(21) Anmeldenummer: 06025479.4
(22) Anmeldetag: 08.12.2006
(51) Int. Cl.: A01D 41/127, A01B 63/32, A01M 7/00

(54) **Landmaschine**
Agricultural machine
Machine agricole

(30) Priorität: 31.01.2006 DE 102006004451
(43) Veröffentlichungstag der Anmeldung: 01.08.2007
(73) Patentinhaber: Alois Pöttinger Maschinenfabrik GmbH, 4710 Grieskirchen (AT)
(72) Erfinder: Baldinger, Martin, Dr., 4722 Peuerbach (AT); Baldinger, Markus, Dr., 4084 St. Agatha (AT)
(74) Vertreter: Thoma, Michael

(56) Entgegenhaltungen:
- EP-A- 0 346 043
- EP-A- 0 936 475
- US-A1- 2003 004 630

## Beschreibung

Die vorliegende Erfindung betrifft eine Landmaschine, insbesondere Erntemaschine wie Ladewagen, mit mindestens einer Bearbeitungseinrichtung zur Erntegut-, Saatgut- und/oder Bodenbearbeitung, einer Bodenerfassungseinrichtung zur berührungslosen Erfassung von Fremdkörpern im Erntegut und/oder einer Bodeneigenschaft, insbesondere Höhe und/oder Kontur, zumindest eines Bodenabschnitts vor und/oder hinter der Bearbeitungseinrichtung, sowie einer Steuereinrichtung zur Steuerung der Bearbeitungseinrichtung in Abhängigkeit eines Signals der Bodenerfassungseinrichtung, wobei die Bodenerfassungseinrichtung zumindest einen akustischen, im hörbaren Frequenzspektrum arbeitenden Abtastsensor aufweist, der den Boden mit Signalen im Frequenzbereich von 20 Hz bis 8 kHz abtastet.

Bei Landmaschinen ist es bekannt geworden, diverse Arbeitsaggregate der Maschinen in Abhängigkeit der vor dem Arbeitsaggregat liegenden Bodenkontur zu steuern. Beispielsweise wurde für Ladewagen vorgeschlagen, die sogenannte Pick-Up, also die Erntegutaufnahmeeinrichtung, die üblicherweise eine rotierende Stachelwalze aufweist, sozusagen schwebend über den Boden zu führen. Hierzu wird mittels eines Bodensensors die Bodenkontur vor der Pick-Up erfaßt, um die letztere bei Bodenwellen anzuheben und in Senken abzusenken, um eine präzise Erntegutaufnahme zu erreichen, ohne auf den Boden aufzufahren. Es wurde auch bereits versucht, mittels solcher Bodensensoren eine Hindernisserkennung zu erreichen, um das Arbeitsaggregat rechtzeitig anheben zu können, wenn sich beispielsweise ein größerer Stein im Erntegut befindet.

Beispielsweise beschreibt die DE 102 12 722 A1 einen Ladewagen, bei dem mit einem Ultraschallsensor der Boden vor der Pick-Up abgetastet wird. In Abhängigkeit des kontinuierlichen Höhensignals dieses Sensors wird die Höhenlage der Pick-Up gesteuert. Aus der DE 102 14 648 A1 ist ein Mähdrescher bekannt, bei dem in ähnlicher Weise das Getreideschneidwerk hinsichtlich seiner Höhenstellung über dem Boden gesteuert wird. Der Bodenabstand eines Maschinenrahmens wird hierbei mit Hilfe eines Radarsensors erfaßt, der den Boden vor dem Schneidwerk abtastet. Eine ähnliche Steuerung zeigt die DE 102 27 484 A1, bei der das Schneidwerk eines Mähdreschers in Abhängigkeit der Bodenneigung vor dem Schneidwerk gesteuert wird. Die genannte Bodenneigung wird hier mit Hilfe eines Laserstrahlsensors ermittelt. Die DE 42 43 172 A1 schlägt vor, die Wirkhöhe des Hächslers einer Rübenerntemaschine in Abhängigkeit des Signal eines Ultraschallsensors zu steuern, der den Boden abtastet. Die EP 1 356 729 B1 schlägt es vor, mittels eines Radarsensors die Dichte und die Feuchte des Feldbewuchses zu ermitteln und in Abhängigkeit dieser ermittelten Parameter das Schneidwerk eines Mähdreschers zu steuern. Weiterhin schlägt die EP 1 190 613 A2 eine Heuwerbungsmaschine in Form eines Schwadrechens vor, bei dem mit Hilfe eines Ultraschallsensors am Maschinenrahmen die Bodenoberfläche auf Unregelmäßigkeiten wie Kanten oder Löcher abgetastet werden soll, um den Schwadrechen entsprechend zu steuern. Aus der DE 198 59 875 A1 ist es weiterhin bekannt, an einer Heuwerbungsmaschine einen kapazitiven oder nach dem Dopplereffekt arbeitenden Sensor vorzusehen, mit Hilfe dessen nicht unmittelbar die Bodenoberfläche selbst, sondern ein darauf liegender Erntegutschwad erfaßt werden soll. Konkret sollen die Arbeitsorgane der Heuwerbungsmaschine angehoben werden, wenn dieser Sensor einen Randschwad erfaßt, der nicht von den Arbeitsorganen bearbeitet werden soll. Weiterhin ist aus der EP 0936475 A1 ein Mähdrescher bekannt, dessen Mähbalken hinsichtlich seiner Position mit Hilfe von akustischen Sensoren gesteuert wird, die den Boden mit Signalen einer Frequenz von 5 kHz abtasten.

Die Anforderungen an die Sensoren für die Bodenerfassung sind jedoch insbesondere bei Erntemaschinen, die auf dem Boden liegendes Erntegut, beispielsweise einen Heuschwad bearbeiten, gegenläufig und bislang noch nicht optimal gelöst. Einerseits soll das Erntegut sozusagen durchleuchtet und tatsächlich die Bodenkontur selbst erfaßt werden, beispielsweise um Hindernisse wie große Steine im Erntegut, aber auch das Höhenprofil des Bodens erfassen zu können, um die Arbeitsaggregate sozusagen schwebend über den Boden zu führen und eine entsprechende Bodenanpassung zu erreichen rund Hindernissen auszuweichen. Hierbei sind beispielsweise die oftmals vorgeschlagenen Ultraschallsensoren nicht optimal, da es an der Schwadoberfläche zu Reflektionen kommen kann, so dass der Sensor das Erntegut nicht durchleuchtet und letztlich die Schwadoberfläche erfaßt wird. Andererseits soll eben nicht nur die Oberfläche des Bodens selbst erfaßt werden, sondern auch die Schwadkontur bzw. die Dichte des Erntegutes um beispielsweise das Schwadvolumen und die Erntegutmenge erfassen zu können und in Abhängigkeit dessen die Arbeitsleistung der entsprechenden Arbeitseinrichtungen ansteuern zu können. Hier sind andere vorgeschlagene Radarsensoren wenig befriedigend, die das Erntegut durchleuchten und nur die Bodenkontur selbst erfassen.

Hier versucht die vorliegende Erfindung Abhilfe zu schaffen. Ihr liegt die Aufgabe zugrunde, eine verbesserte Landmaschine der genannten Art zu schaffen, die Nachteile des Standes der Technik vermeidet und letzteren in vorteilhafter Weise weiterbildet. Vorzugsweise soll es mit einer einfachen Sensoranordnung ermöglicht werden, sowohl das auf dem Boden liegende Erntegut zu durchleuchten und die Bodenoberfläche selbst zu erfassen als auch einen Erntegutschwad hinsichtlich Schwadoberfläche und Dichte bzw. Volumen zu erfassen.

Erfindungsgemäß wird diese Aufgabe durch eine Landmaschine gemäß Anspruch 1 gelöst. Bevorzugte Ausgestaltungen der Erfindung sind Gegenstand der abhängigen Ansprüche.

Erfindungsgemäß wird die Bodenerfassung mit Hilfe eines akustischen Sensors durchgeführt, der im hörbaren Frequenzspektrum abwechselnd in zumindest zwei verschiedenen Betriebsmodi arbeitet. Dabei wird einerseits in einem Bodenerfassungsmodus der zu erfassende Bodenabschnitt mit akustischen Signalen in einem Frequenzbereich von 20 Hz bis 8 kHz abgetastet. Eine Bodenabtastung mit Schallwellen in diesem Frequenzbereich erweist sich als besonders vorteilhaft, um ein Durchdringen von Erntegut zu erreichen und Reflektionen des Abtastsignals an der Schwadoberfläche zu vermeiden. Es wird eine konstante Arbeitsgeschwindigkeit in Luft, Heu, Stroh und Gras erreicht. Hierdurch können beispielsweise Fremdkörper im aufzunehmenden Erntegutschwad sicher erkannt werden. Auch das Bodenrelief wird unabhängig von darauf liegendem Erntegut präzise erfaßt, wodurch eine exakte Höhensteuerung bzw. Bodenanpassung der Arbeitseinrichtungen der Landmaschine erreicht werden kann. Vorzugsweise erfolgt die Bodenabtastung im Frequenzbereich von 800 Hz bis 4 kHz.

Andererseits kann der zumindest eine Abtastsensor und/oder auch ein weiterer akustischer Abtastsensor auch in einem höheren Frequenzbereich des hörbaren Spektrums arbeiten, um auch die Schwadform und/oder -größe und/oder -dichte des auf dem Boden liegenden Ernteguts zu erfassen. Dabei wird der Erntegutschwad auf dem genannten Bodenabschnitt mit akustischen Signalen von etwa 10 kHz bis 22 kHz vorzugsweise in Form von Chirpsignalen abgetastet. Diese Chirpsignale werden je nach Frequenz bereits an der Schwadoberfläche reflektiert, so dass eine Aussage über die Schwadkontur und damit die zu verarbeitende Erntegutmenge und damit die benötigte Aufnahmeleistung getroffen werden kann.

Die Abtastung des Bodens erfolgt dabei vorteilhafter Weise ausreichend weit vor der jeweiligen Arbeitseinrichtung, so dass diese vorausschauend angesteuert werden kann, um in der gewünschten Weise zu arbeiten. Insbesondere kann hierbei die Höhenführung der Arbeitseinrichtung, aber auch deren Arbeitsleistung an das im nächsten Moment überfahrene Bodenprofil bzw. den ankommenden Erntegutschwad angepaßt werden. Alternativ oder zusätzlich kann jedoch auch ein Bodenabschnitt hinter dem Arbeitsaggregat abgetastet werden, beispielsweise um das von der Arbeitseinrichtung erzielte Arbeitsergebnis zu erfassen. Grundsätzlich könnte auch ein neben dem Arbeitsaggregat liegender Bodenabschnitt erfaßt werden, beispielsweise um eine Bearbeitungskante zu erfassen oder bereits die in der nächsten Schleife erfaßte Wegstrecke zu erfassen.

Grundsätzlich kann die Bodenerfassungseinrichtung mehrere Abtastsensoren aufweisen, die in den verschiedenen Frequenzbereichen arbeiten. Um jedoch eine einfach bauende, kostengünstige Ausführung zu erreichen, ist gemäß der Erfindung vorgesehen, dass der zumindest eine Abtastsensor abwechselnd in zwei verschiedenen Betriebsarten betrieben wird, nämlich einerseits in einem Bodenerfassungsmodus, in dem der Boden mit Signalen im Frequenzbereich von 20 Hz bis 8 kHz abgetastet wird, und andererseits in einem Schwaderfassungsmodus, in dem der Boden zur Schwaderfassung mit Abtastsignalen in einem höheren hörbaren Frequenzbereich insbesondere von 10 bis 22 kHz abgetastet wird. Während das Bodenrelief möglichst kontinuierlich erfaßt wird und der Sensor hierzu möglichst kontinuierlich in dem niedrigen Frequenzbereich arbeitet, kann es für die Schwadformerkennung ausreichend sein, in vorgegebenen zeitlichen Abständen entsprechende Chirpsignale in dem höheren Frequenzbereich auszusenden. Durch den Betrieb des Abtastsensors in verschiedenen Betriebsmodi kann ein und derselbe Sensor verschiedene Abtastaufgaben erledigen.

Vorteilhafterweise arbeitet der zumindest eine Abtastsensor mit einem breitbandigen Signal. Durch solche breitbandigen Sendesignale wird die Abtastung sozusagen immun gegen Umgebungsgeräusche.

Nach einer vorteilhaften Ausführung der Erfindung arbeitet der zumindest eine Abtastsensor zur Bodenabtastung mit einer Gauß'schen Pulsfamilie. Besonders vorteilhaft ist dabei die Verwendung einer Gauß'schen Pulsfamilie zweiter Ordnung mit Frequenzen zwischen 800 Hz und 4 kHz. Mit Hilfe einer solchen Verteilung der Abtastsignale nach dem sogenannten "Mexican hat" kann eine präzise Erfassung bei weitestgehender Ausblendung von Störeinflüssen erreicht werden.

Die Länge der Signalpulse kann dabei grundsätzlich verschieden festgelegt werden. Als vorteilhafter Weise arbeitet der Abtastsensor mit Signalpulsen von einer Dauer von weniger als 10 ms, vorzugsweise weniger als 5 ms. Nach einer besonders vorteilhaften Ausführung können Signalspulse mit einer Dauer von etwa 0,3 ms Verwendung finden.

Um in der gewünschten Weise mit Breitbandsignalen den Boden abtasten zu können, umfasst der Abtastsensor in Weiterbildung der Erfindung einen Breitbandlautsprechen sowie einen Breitbandempfänger für einen Frequenzbereich von 20 Hz bis 22 kHz.

Je nach Ausbildung der Landmaschine und je nach Anwendungszweck kann bereits die Verwendung eines einzigen Abtastsensors ausreichend sein. Vorteilhafterweise umfasst die Bodenerfassungseinrichtung zumindest einen sich quer zur Fahrtrichtung erstreckenden Sensorbalken, an dem voneinander beabstandet mehrere Abtastsensoren angeordnet sind. Hierdurch wird es ermöglicht, den Boden über die gesamte Arbeitsbreite der Landmaschine abzutasten. Der Sensorbalken kann dabei bei Ausbildung der Landmaschine als Anbaugerät, das an einen Schlepper anbaubar ist, an einem Maschinenrahmen der Landmaschine angeordnet sein. Alternativ kann der Sensorbalken auch an dem Schlepper befestigt werden. Insbesondere um ein in Fahrtrichtung gesehen größeres Vorauseilen der Sensoren zu erreichen, kann ein solcher Sensorbalken frontseitig an dem Schlepper angebaut werden. Es versteht sich, dass auch mehrere Abtastsensoren und/oder Sensorbalken in Fahrtrichtung betrachtet hintereinander angeordnet sein können, beispielsweise ein erster Sensorbalken am Schlepper und ein zweiter Sensorbalken an dem Anbaugerät selbst.

In Abhängigkeit der verschiedenen Abtastsignale in den verschiedenen Frequenzbereichen, insbesondere den Auswertungen hiervon, werden verschiedene Arbeitseinrichtungen bzw. verschiedene Betriebsparameter der Landmaschine gesteuert. Insbesondere kann in Abhängigkeit des niedrigerfrequenten Abtastsignals im Frequenzbereich unter 8 kHz bzw. der Auswertung dieses Signales eine Höheneinstellung eines Arbeitsaggregats, beispielsweise einer Aufnahmevorrichtung eines Ladewagens wie einer Pick-Up mit Stachelwalze, gesteuert werden. Zum anderen kann in Abhängigkeit des höherfrequenten Chirpsignals im Frequenzbereich über 10 kHz die Arbeitsleistung eines Arbeitsaggregats gesteuert werden, beispielsweise kann die Drehgeschwindigkeit der Stachelwalze einer Ladewagen Pick-Up oder der Aufnahmefördereinrichtung erhöht werden, wenn mit Hilfe der Chirpsignale eine Zunahme des Erntegutvolumens erfaßt wird.

Die vorliegende Erfindung wird nachfolgend anhand bevorzugter Ausführungsbeispiele und zugehöriger Zeichnungen näher erläutert. In den Zeichnungen zeigen:
- Figur 1:: eine schematische Seitenansicht eines Ladewagens nach einer bevorzugten Ausführung der Erfindung, bei dem ein erster Satz von Abtastsensoren am Ladewagenrahmen und ein zweiter Satz von Abtastsensoren am Schlepper vorgesehen sind,
- Figur 2:: eine Darstellung der von den Abtastsensoren verwendeten Gauß'schen Pulsfamilie zweiter Ordnung, wobei das Diagramm a den Pulsverlauf über der Zeit und das Diagramm b die Frequenzverteilung zeigt,
- Figur 3:: eine Darstellung der Chirpsignale zur Schwadabtastung, wobei die Startfrequenz f₀ eines Chirpsignals 10 kHz und die Bandbreite B 12 kHz sowie die Chirpdauer T 3 ms beträgt,
- Figur 4:: eine Draufsicht auf eine Heuwerbungsmaschine in Form eines Zetters mit einem Sensorbalken nach einer vorteilhaften Ausführung der Erfindung,
- Figur 5:: eine Draufsicht auf eine Heuwerbungsmaschine in Form eines Vierrechenschwaders mit einem Sensorbalken nach einer vorteilhaften Ausführungsform der Erfindung,
- Figur 6:: eine Seitenansicht eines Schwaders mit einem Abtastsensorbalken nach einer vorteilhaften Ausführung der Erfindung,
- Figur 7:: eine Draufsicht auf eine Mähmaschine mit frontangebauten und heckangebauten Mähwerken mit jeweils einem vorgeschalteten Sensorbalken nach einer vorteilhaften Ausführung der Erfindung und
- Figur 8:: eine Seitenansicht eines Mähwerks mit Abtastsensoren.

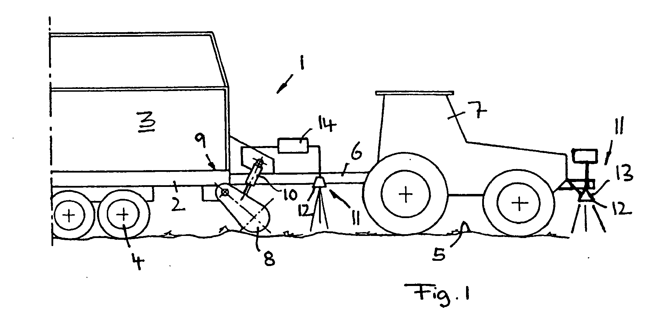

Der in Figur 1 gezeigte Ladewagen 1 besitzt einen Maschinenrahmen 2, der einen Erntegutspeicher 3 trägt und selbst von einem Fahrwerk 4 getragen wird, so dass er auf dem zu bearbeitenden Boden 5 fahren kann. Mittels einer Deichsel 6 ist der Ladewagen 1 an einen Schlepper 7 ankuppelbar, so dass er von diesem gezogen werden kann.

An dem Maschinenrahmen 2 ist als Erntevorsatz eine Aufnahmevorrichtung in Form einer Pick-Up 8 mit einer rotierenden Stachelwalze zur Aufnahme von auf dem Boden liegenden Erntegut sowie eine Fördereinrichtung 9 zur Förderung des aufgenommenen Ernteguts in den Erntegutspeicher 3 vorgesehen.

Die genannte Pick-Up 8 ist an dem Maschinenrahmen 2 höhenverstellbar angelenkt und kann durch einen Kraftheber 10 in Form eines Hydraulikzylinders gegenüber dem Maschinenrahmen 2 angehoben und abgesenkt werden. Obwohl eine hydraulische Ausführung der Hubvorrichtung bevorzugt ist, versteht es sich, dass auch andere Ausbildungen eines Krafthebers 10 vorgesehen werden können.

Zur Erfassung eines in Fahrtrichtung vor der Pick-Up 8 liegenden Bodenabschnitts 5. umfasst der Ladewagen 1 eine Bodenerfassungseinrichtung 11, die in der gezeichneten Ausführungen zwei Sätze von Abtastsensoren 12 umfasst. Jeder Satz von Abtastsensoren 12 umfasst dabei vorteilhafterweise eine Mehrzahl von Abtastsensoren, die auf einem sich quer zur Fahrtrichtung erstreckenden Sensorbalken 13 voneinander beabstandet angeordnet sind. Der erste Sensorbalken 13 ist an der Deichsel 6 des Ladewagens 1 angeordnet, um den unmittelbar vor der Pick-Up 8 liegenden Bodenabschnitt abzutasten. Der zweite Sensorbalken 13 ist frontseitig an dem Schlepper 7 anbaubar, um einen weiter vorne liegenden Bodenabschnitt abtasten zu können.

Die Abtastsensoren 12 sind dabei jeweils akustische Sensoren, die im hörbaren Frequenzspektrum arbeiten und jeweils einen Breitbandlautsprecher sowie einen Breitbandempfänger besitzt, die für einen Frequenzbereich von 20 Hz bis 22 kHz geeignet sind.

Um das Bodenrelief abzutasten, arbeiten die Abtastsensoren 12 mit einem breitbandigen Abtastsignal in einem Frequenzbereich von 20 Hz bis 8 kHz, vorzugsweise 100 Hz bis 4 kHz. Hierdurch kann eine gute Durchdringung eines auf dem Boden liegenden Erntegutschwads erreicht werden, ohne dass die Abtastsignale an der Schwadoberfläche reflektiert werden würden. Zudem wird eine gleichbleibende Ausbreitungsgeschwindigkeit sichergestellt, so dass durch die unterschiedlichen Signallaufzeiten zwischen im Erntegutschwad liegenden Fremdkörpern wie großen Steinen und der Bodenoberfläche unterschieden werden kann.

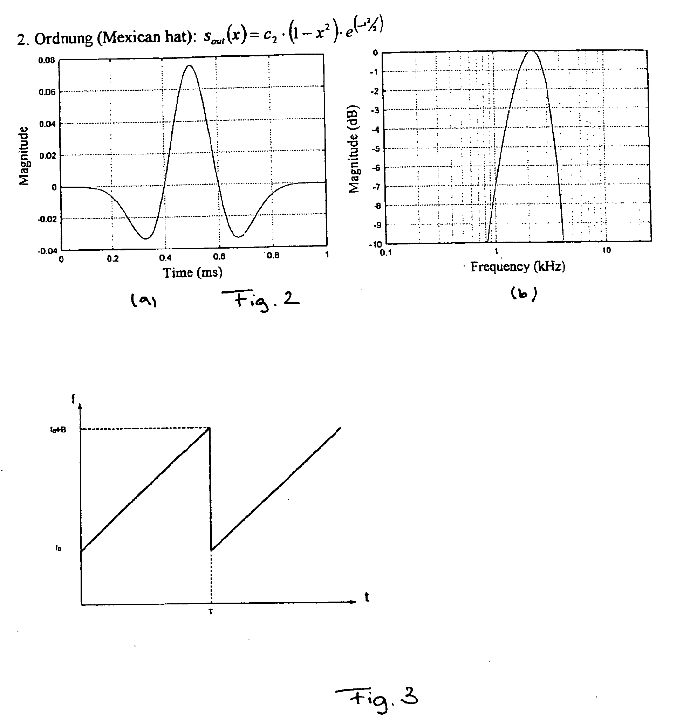

Wie Figur 2 zeigt, arbeiten die Abtastsensoren 12 dabei vorteilhafterweise mit einer sogenannten Gauß'schen Pulsfamilie zweiter Ordnung, dem sogenannten "Mexican hat". Wie Figur 2 a verdeutlicht, beträgt dabei die Dauer des Signalpulses weniger als 1 ms, der Kernbereich des Signales hat eine Pulsdauer von etwa 0,3 ms. Wie Figur 2 b verdeutlicht, wird dabei mit Signalpulsen in einem Frequenzbereich von 0,8 bis 4 kHz gearbeitet.

Zusätzlich zu diesem Bodenerfassungs-Betriebsmodus arbeiten die Abtastsensoren 12 darüber hinaus in einem Schwadformerfassungsmodus, in dem sie Chirpsignale in einem Frequenzbereich von 10 kHz bis 22 kHz abgeben und die Signalreflektionen erfassen. Wie Figur 3 zeigt, können diese Chirpsignale hinsichtlich ihres Frequenzverlaufes ein Sägezahnprofil aufweisen, bei dem mit einer Startfrequenz f₀ von etwa 10 kHz und einer Bandbreite B von etwa 12 kHz gearbeitet werden. Die Chirpdauer T beträgt dabei etwa 3 ms. Diese höherfrequenten Chirpsignale werden an der Oberfläche des Erntegutschwads reflektiert, so dass die empfangenen, reflektierten Signale die Schwadform charakterisieren. In einer Auswertelogik können hieraus Rückschlüsse über die Größe des Schwads, also sein Volumen gezogen werden.

Die Abtastsensoren 12 sind dabei mit einer Steuereinrichtung 14 verbunden, die eine Auswerteeinheit aufweist, um die von den Abtastsensoren 12 erhaltenen Signale auszuwerten. Die Auswertung kann dabei grundsätzlich in verschiedener Art und Weise erfolgen. Nach einer vorteilhaften Ausführung der Erfindung wird hierbei eine Auswertung mit Korrelation und Hilbert'scher Transformation vorgenommen.

Die Steuereinrichtung 14 steuert so dann in Abhängigkeit der ausgewerteten Signale der Abtastsensoren 12 die Arbeitsaggregate des Ladewagens 1 an. Insbesondere wird der Kraftheber 10 zur Höheneinstellung der Pick-Up 8 in Abhängigkeit der Signale der Abtastsensoren 12 gesteuert, um die Höhenführung der Pick-Up 8 an das erfaßte Bodenrelief anzupassen. Die Höhensteuerung arbeitet dabei vorteilhafter Weise mit den niedrigerfrequenten Abtastsignalen im vorgenannten Bereich von 20 Hz bis 8 kHz bzw. den Auswertungen dieser Signale, so dass die Höhensteuerung exakt dem Verlauf der Bodenkontur folgt bzw. Hindernisse wie Steine im Erntegutschwad berücksichtigt.

Die Chirpsignale im höherfrequenten Bereich zur Erfassung der Schwadform werden hingegen vorteilhafterweise zur Steuerung der Arbeitsleistung der Arbeitsaggregate des Ladewagens 1 verwendet. Insbesondere kann eine Steuerung der Drehzahl der Pick-Up 8 sowie der nachgeschalteten Fördereinrichtung 9 in Abhängigkeit dieser Chirpsignale bzw. ihrer Auswertungen erfolgen. Erfassen die Abtastsensoren 12 eine Zunahme des Schwadvolumens, kann die Drehzahl der Fördereinrichtung erhöht werden.

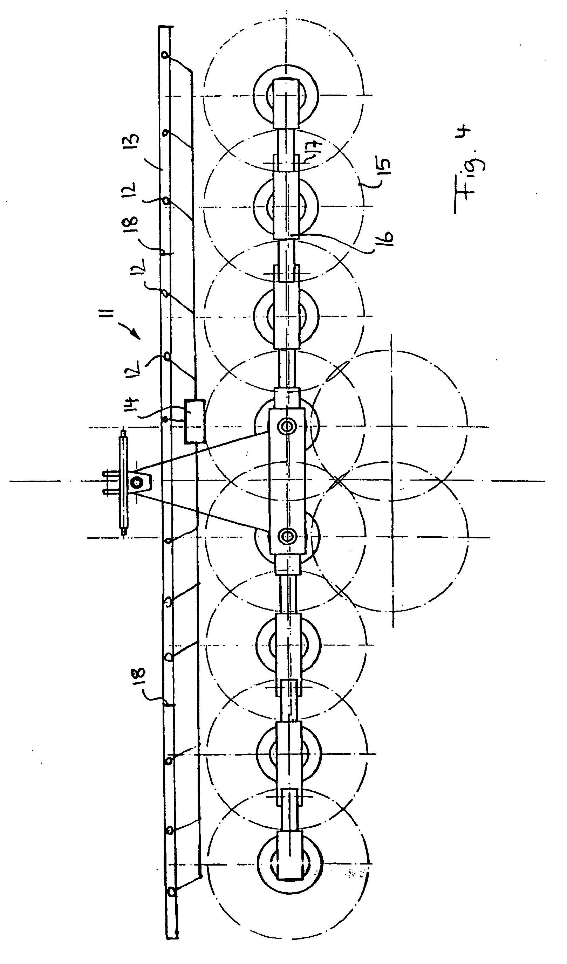

Auch wenn ein Ladewagen eine besonders vorteilhafte Anwendung der vorliegenden Erfindung darstellt, können auch andere Landmaschinentypen mit der Bodenerfassungseinrichtung 11 mit im hörbaren Frequenzspektrum arbeitenden akustischen Abtastsensoren ausgestattet werden. Wie Figur 4 zeigt, kann als Landmaschine eine Heuwerbungsmaschine in Form eines Kreiselzetters vorgesehen sein, wobei vorzugsweise über die gesamte Arbeitsbreite der Heuwerbungsmaschine ein Sensorbalken 13 am Maschinenrahmen 2 befestigt ist, um den Bodenabschnitt vor den Kreiselrechen abzutasten. In der gezeichneten Ausführung ist dabei der Sensorbalken 13 abklappbar ausgebildet. Die in ihrer Arbeitsstellung um aufrechte Achsen rotierenden Kreiselrechen 15 sind an einem Querrahmen 16 angeordnet, der in mehrere Abschnitte unterteilt ist, die zueinander um in Fahrtrichtung weisende, liegende Schwenkachsen 17 in an sich bekannter Weise in eine Transportstellung zusammengeklappt werden können und gegebenenfalls auch um eine aufrechte Schwenkachse zusammengeschwenkt werden können. Um auch die Arbeitsbreite des Sensorbalkens 13 für den Straßentransport reduzieren zu können, umfasst auch der Sensorbalken 13 mindestens eine Schwenkachse 17 um entsprechend zusammengeklappt werden zu können. In der gezeichneten Ausführung sind zwei in Fahrtrichtung weisende, liegende Schwenkachsen 18 an dem Sensorbalken 13 vorgesehen, so dass die außen liegenden Sensorbalkenabschnitte nach oben und innen geschwenkt werden können.

Die Abtastsensoren 12 arbeiten analog der zuvor beschriebenen Ausführung vorteilhafterweise sowohl mit niederfrequenten Basissignalen sowie höherfrequenten Chirpsignalen, um sowohl das Bodenrelief als auch die Erntegutkontur zu erfassen. In Abhängigkeit dessen kann eine Höhenführung der Kreiselrechen erfolgen als auch deren Drehgeschwindigkeit geregelt werden.

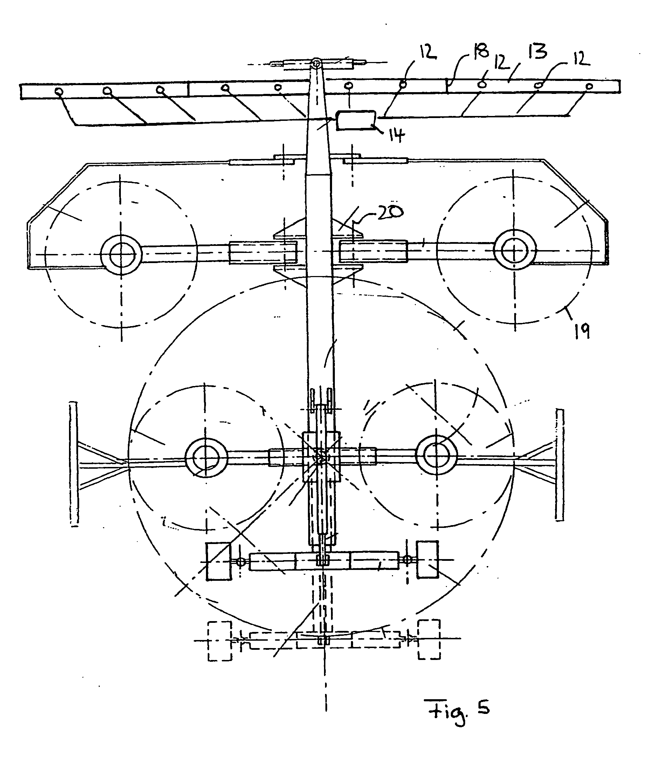

Figur 5 zeigt eine Heuwerbungsmaschine in Form eines Kreiselschwaders mit vier Schwadrechen 19, die gestaffelt hintereinander angeordnet sind, wobei die beiden äußeren Schwadrechen 19 a und 19 b ähnlich dem zuvor gezeigten Kreiselzetter um in Fahrtrichtung weisende, liegende Schwenkachsen 20 und den daran befestigten Tragarmen nach oben und innen in eine Transportstellung geschwenkt werden können.

Vor den Schwadrechen 19 ist wiederum ein Sensorbalken 13 mit einer Vielzahl von nebeneinander beabstandet angeordneten Abtastsensoren 12 vorgesehen, die den vor den Schwadrechen 19 liegenden Bodenabschnitt abtasten. Auch hier kann der Sensorbalken 13 um Schwenkachsen 18 zusammengeklappt werden.

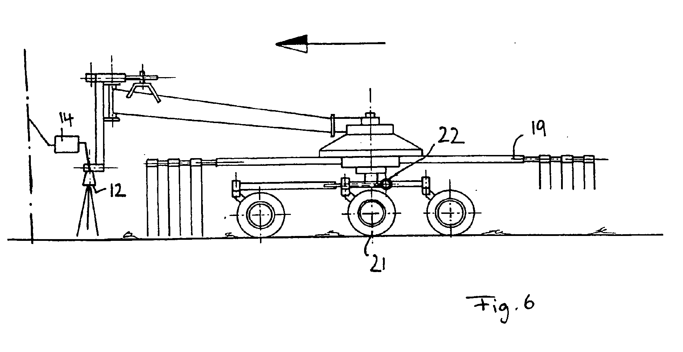

In Abhängigkeit der Signale der Abtastsensoren 12 bzw. den Auswertungen hiervon kann ebenfalls die Höheneinstellung der Schwadrechen 19 an das erfaßte Bodenrelief angepaßt und/oder die Arbeitsleistung der Schwadrechen verändert werden. Beispielsweise kann, wie dies Figur 6 zeigt, die Höheneinstellung der Schwadrechen 19 über ein verstellbares Fahrwerk 21 erreicht werden, das jeweils unter einem Schwadrechen 19 angeordnet ist. Über einen Kraftheber 22 kann die Höhenstellung des Fahrwerks 21 verändert werden, je nach dem welche Bodenhöhe die Abtastsensoren 12, die den Schwadrechen 19 voranlaufen, erfassen.

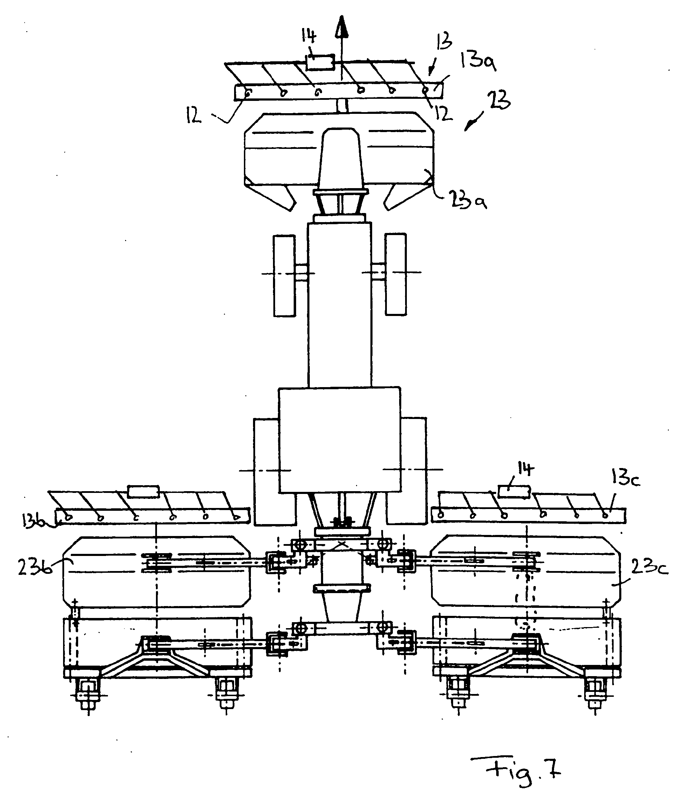

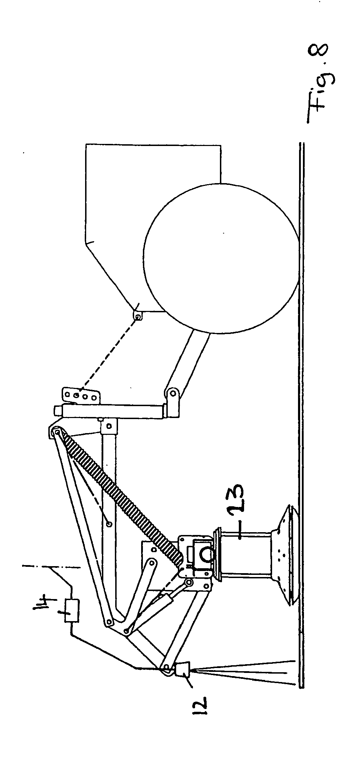

Ebenso kann eine Bodenerfassungseinrichtung 11 der beschriebenen Art an einer Mähmaschine vorgesehen sein, wie sie die Figuren 7 und 8 zeigen. Gezeichnet ist dabei eine Ausführung eines Mähwerks 23 mit einem frontangebauten Mähwerk 23 a sowie zwei heckangebauten, seitlichen Mähwerken 23 b und c. Vor jedem der genannten Mähwerke 23 a, b und c ist dabei ein Sensorbalken 13 mit einer Mehrzahl von Abtastsensoren 12 vorgesehen, die quer zur Fahrtrichtung voneinander beabstandet angeordnet sind. Die Höheneinstellung der Mähwerke 23 kann dabei über eine Dreipunktanlenkung von dem Schlepper 7 her erfolgen, und zwar in der beschriebenen Weise durch Auswertung der Signale der Abtastsensoren 12. Zusätzlich kann auch hier gegebenenfalls eine Steuerung der Arbeitsleistung in Abhängigkeit der Chirpsignale der Abtastsensoren 12 erfolgen.

Die seitlichen Mähwerke 23 b und c können analog den zuvor beschriebenen Ausführungen durch nach oben schwenkende umliegende Schwenkachsen in eine Transportstellung gebracht werden, wobei vorteilhafterweise auch hier die Sensorbalken 13, die den seitlichen Mähwerken vorgeschaltet sind, mitgeschwenkt werden können.

## Patentansprüche

1. Landmaschine, insbesondere Erntemaschine wie Ladewagen, mit mindestens einer Bearbeitungseinrichtung (8, 9; 15; 19; 23) zur Erntegut-, Saatgut- und/oder Bodenbearbeitung, einer Bodenerfassungseinrichtung (11) zur berührungslosen Erfassung von Fremdkörpern im Erntegut und/oder einer Bodeneigenschaft, insbesondere Höhe und/oder Kontur, zumindest eines Bodenabschnitts vor und/oder hinter der Bearbeitungseinrichtung (8, 9; 15; 19; 23), sowie einer Steuereinrichtung (14) zur Steuerung der Bearbeitungseinrichtung (8, 9; 15; 19; 23) in Abhängigkeit eines Signals der Bodenerfassungseinrichtung (11), wobei die Bodenerfassungseinrichtung (11) zumindest einen akustischen, im hörbaren Frequenzspektrum arbeitenden Abtastsensor (12) aufweist, der den Bodenabschnitt mit akustischen Signalen in einem Frequenzbereich von 20 Hz bis 8 kHz abtastet, **dadurch gekennzeichnet, dass** der Abtastsensor (12) abwechselnd in zwei verschiedenen Betriebsmodi arbeitet, nämlich einerseits in einem Bodenerfassungsmodus, in dem der Abtastsensor (12) zur Bodenabtastung in dem genannten Frequenzbereich von 20 Hz bis 8 kHz arbeitet, und andererseits in einem Ernteguterfassungsmodus, in dem der Abtastsensor (12) zur Ernteguterfassung in einem Frequenzbereich von 10 kHz bis 22 kHz arbeitet, und daß die Steuereinrichtung (14) in Abhängigkeit der Abtastsignale aus den beiden Betriebsmodi unterschiedliche Maschinenparameter steuert, nämlich in Abhängigkeit der niederfrequenten Abtastsignale des Bodenerfassungsmodus einen ersten Maschinenparameter und in Abhängigkeit der höherfrequenten Chirpsignale des Ernteguterfassungsmodus einen zweiten, von dem ersten verschiedenen Maschinenbetriebsparameter.

2. Landmaschine nach dem vorhergehenden Anspruch, wobei der zumindest eine Abtastsensor (12) mit einem breitbandigen Abtastsignal arbeitet.

3. Landmaschine nach einem der vorhergehenden Ansprüche, wobei der zumindest eine Abtastsensor (12) zur Bodenabtastung im Bodenerfassungsmodusmit einer Gauß'schen Pulsfamilie arbeitet.

4. Landmaschine nach dem vorhergehenden Anspruch, wobei der Abtastsensor (12) eine Gauß'sche Pulsfamilie zweiter Ordnung mit Frequenzen zwischen 800 Hz und 4 kHz verwendet.

5. Landmaschine nach einem der vorhergehenden Ansprüche, wobei der zumindest eine Abtastsensor mit Signalpulsen von einer Dauer von weniger als 10 ms, vorzugsweise weniger als 1 ms, insbesondere etwa 0,3 ms arbeitet.

6. Landmaschine nach einem der vorhergehenden Ansprüche, wobei der zumindest eine Abtastsensor (12) einen Breitbandsender sowie einen Breitbandempfänger jeweils für einen Frequenzbereich von 20 Hz bis 22 kHz aufweist.

7. Landmaschine nach einem der vorhergehenden Ansprüche, wobei die Bodenerfassungseinrichtung (11) zumindest einen sich quer zur Fahrtrichtung erstreckenden Sensorbalken (13) aufweist, an dem voneinander beabstandet mehrere Abtastsensoren (12) angeordnet sind.

8. Landmaschine nach einem der vorhergehenden Ansprüche, wobei die Bearbeitungseinrichtung eine höhenverstellbare Aufnahmevorrichtung (8), insbesondere eine Pick Up mit einer Stachelwalze aufweist, deren Höhe über dem Boden und/oder deren Aufnahmegeschwindigkeit von der Steuereinrichtung (14) in Abhängigkeit der Signale des zumindest einen Abtastsensors (12) gesteuert wird.

9. Landmaschine nach dem vorhergehenden Anspruch, wobei die Höhe über dem Boden entsprechend der Auswertung der Abtastsignale im niedrigen Frequenzbereich von 20 Hz bis 8 kHz und die Arbeitsgeschwindigkeit/leistung entsprechend der Auswertung der Chirpsignale im höheren Frequenzbereich von 10 kHz bis 22 kHz steuerbar ist.

## Claims

1. An agricultural machine, in particular a harvester such as a self-loading wagon, comprising at least one processing device (8, 9; 15; 19; 23) for the processing of harvest, seeds and/or soil, a soil detection device (11) for the contact-free detection of foreign bodies in the harvest and/or of a soil property, in particular the height and/or contour, of at least one ground section in front of and/or behind the processing device (8, 9; 15; 19; 23), as well as a control device (14) for the control of the processing device (8, 9; 15; 19; 23) in dependence on a signal of the soil detection device (11), wherein the soil detection device (11) has at least one acoustic scanning sensor (12) which works in the audible frequency spectrum and which scans the ground section with acoustic signals in a frequency range from 20 Hz to 8 kHz, **characterised in that** the scanning sensor (12) works alternately in two different operating modes, namely on the one hand in a soil detection mode in which the scanning sensor (12) works in the named frequency range from 20 Hz to 8 kHz for the soil scanning and, on the other hand, in a harvest detection mode in which the scanning sensor (12) works in a frequency range from 10 kHz to 22 kHz for the harvest detection; and **in that** the control device (14) controls different machine parameters in dependence on the scanning signals from the two operating modes, namely a first machine parameter in dependence on the low-frequency scanning signals of the soil detection mode and a second machine operating parameter differing from the first in dependence on the higher-frequency chirp signals of the harvest detection mode.

2. An agricultural machine in accordance with the preceding claim, wherein the at least one scanning sensor (12) works with a broadband scanning signal.

3. An agricultural machine in accordance with one of the preceding claims, wherein the at least one scanning sensor (12) works with a Gaussian pulse family in the soil detection mode for the soil scanning.

4. An agricultural machine in accordance with the preceding claim, wherein the scanning sensor (12) uses a Gaussian pulse family of the second order with frequencies between 800 Hz and 4 kHz.

5. An agricultural machine in accordance with any one of the preceding claims, wherein the at least one scanning sensor works with signal pulses of a duration of less than 10 ms, preferably less than 1 ms, in particular approximately 0.3 ms.

6. An agricultural machine in accordance with any one of the preceding claims, wherein the at least one scanning sensor (12) has a broadband sensor as well as a broadband receiver in each case for a frequency range from 20 Hz to 22 kHz.

7. An agricultural machine in accordance with any one of the preceding claims, wherein the soil detection device (11) has at least one sensor bar (13) which extends transversely to the direction of travel and at which a plurality of scanning sensors (12) are arranged spaced apart from one another.

8. An agricultural machine in accordance with any one of the preceding claims, wherein the processing device has a vertically adjustable receiving apparatus (8), in particular a pick-up with a spike-tooth roller, whose height above the ground and/or whose receiving speed is controlled by the control device (14) in dependence on the signals of the at least one scanning sensor (12).

9. An agricultural machine in accordance with the preceding claim, wherein the height above the ground is controllable in accordance with the evaluation of the scanning signals in the low-frequency range from 20 Hz to 8 kHz and the working speed/working performance is controllable in accordance with the evaluation of the chirp signals in the higher frequency range from 10 kHz to 22 kHz.

## Revendications

1. Machine agricole, en particulier moissonneuse ainsi que chariot chargeur, avec au moins une installation de traitement (8, 9; 15; 19; 23) pour le traitement de la récolte, de la semence et/ou du sol, une installation de détection de sol (11) pour détecter sans contact des corps étrangers dans la récolte et/ou une propriété du sol, en particulier la hauteur et/ou le contour, au moins d'une section de sol en amont et/ou en aval de l'installation de traitement (8, 9; 15; 19; 23), ainsi qu'une installation de commande (14) pour commander l'installation de traitement (8, 9; 15; 19; 23) en fonction d'un signal de l'installation de détection de sol (11), où l'installation de détection de sol (11) présente au moins un capteur de balayage acoustique (12) fonctionnant dans le spectre de fréquence audible, qui balaie la section de sol avec des signaux acoustiques dans une plage de fréquence de 20 Hz à 8 kHz, **caractérisée en ce que** le capteur de balayage (12) fonctionne alternativement dans deux modes de fonctionnement différents, à savoir d'une part en un mode de détection de sol, dans lequel le capteur de balayage (12), pour le balayage du sol, fonctionne dans la plage de fréquence indiquée de 20 Hz à 8 kHz et, d'autre part, en un mode de détection de récolte, dans lequel le capteur de balayage (12), pour la détection de la récolte, fonctionne dans une plage de fréquence de 10 kHz à 22 kHz, et **en ce que** l'installation de commande (14) commande en fonction des signaux de balayage à partir des deux modes de fonctionnement des paramètres de machine différents, à savoir en fonction des signaux de balayage basse fréquence du mode de détection de sol, un premier paramètre de machine, et en fonction des signaux de modulation par compression des impulsions de fréquence plus élevée du mode de détection de récolte, un deuxième paramètre de machine différent du premier.

2. Machine agricole selon la revendication précédente, dans laquelle le au moins un capteur de balayage (12) fonctionne avec un signal de balayage à bande large.

3. Machine agricole selon l'une des revendications précédentes, où au moins un capteur de balayage (12), pour le balayage du sol, fonctionne en mode de détection de sol avec une famille d'impulsions Gaussienne.

4. Machine agricole selon la revendication précédente, où le capteur de balayage (12) utilise une famille d'impulsions Gaussienne de deuxième ordre avec des fréquences entre 800 Hz et 4 kHz.

5. Machine agricole selon l'une des revendications précédentes, où le au moins un capteur de balayage fonctionne avec des impulsions de signaux d'une durée inférieure à 10 ms, de préférence inférieure à 1 ms, en particulier d'environ 0,3 ms.

6. Machine agricole selon l'une des revendications précédentes, où le au moins un capteur de balayage (12) présente un capteur à bande large ainsi qu'un récepteur à bande large, respectivement pour une plage de fréquence de 20 Hz à 22 kHz.

7. Machine agricole selon l'une des revendications précédentes, où l'installation de détection de sol (11) présente au moins une poutre de capteurs (13) s'étendant transversalement à la direction d'avancement, sur laquelle sont disposés plusieurs capteurs de balayage (12) espacés les uns des autres.

8. Machine agricole selon l'une des revendications précédentes, où l'installation de traitement présente un dispositif de réception (8) réglable en hauteur, en particulier un ramasseur avec un rouleau à dents dont la hauteur au-dessus du sol et/ou sa vitesse de ramassage est commandée par l'installation de commande (14) en fonction des signaux du au moins un capteur de balayage (12).

9. Machine agricole selon la revendication précédente, où la hauteur au-dessus du sol peut être commandée conformément à l'évaluation des signaux de balayage dans la plage de fréquence basse de 20 Hz à 8 kHz et la vitesse/rendement de travail conformément à l'évaluation des signaux de modulation par compression des impulsions dans la plage de fréquence plus élevée de 10 kHz à 22 kHz.
